# EUROPÄISCHE PATENTSCHRIFT

(11) **EP 2 636 555 B1**
(45) Veröffentlichungstag und Bekanntmachung des Hinweises auf die Patenterteilung: **30.04.2014**
(21) Anmeldenummer: 12158613.5
(22) Anmeldetag: 08.03.2012
(51) Int. Cl.: B60K 15/05, B60K 15/04

(54) **Einfüllstutzen für einen Diesel-Kraftstoffbehälter mit einer Sperrvorrichtung**
Fill support for a diesel fuel container with a blocking device
Tubulures de remplissage pour un réservoir de carburant diesel doté d'un dispositif de verrouillage

(43) Veröffentlichungstag der Anmeldung: 11.09.2013
(73) Patentinhaber: Magna Steyr Fuel Systems GmbH, 41516 Grevenbroich (DE)
(72) Erfinder: Pfohl, Hans-Jürgen, 41516 Grevenbroich (DE)
(74) Vertreter: Rausch, Gabriele

(56) Entgegenhaltungen:
- EP-A1- 1 284 212
- US-A1- 2010 218 849

## Beschreibung

Die vorliegende Erfindung betrifft einen Einfüllstutzen für einen Diesel-Kraftstoffbehälter mit einer Sperrvorrichtung zur Vermeidung einer Fehlbetankung durch ein Zapfventil mit geringerem Durchmesser als dem minimalen Durchmesser eines Diesel-Zapfventils.

Derartige Vorrichtungen werden verwendet um das Betanken eines mit Diesel betriebenen Kraftfahrzeuges durch ein Benzin-Zapfventil zu verhindern oder zumindest zu erschweren. Dabei wird die Tatsache ausgenutzt, dass Diesel-Zapfventile einen bekannten größeren Durchmesser aufweisen als Benzin-Zapfventile. Das ordnungsgemäße Einführen eines Zapfventils mit geringerem Durchmesser als dem minimalen Durchmesser eines Diesel-Zapfventils in den Einfüllstutzen eines Diesel-Kraftstoffbehälters wird daher durch eine Vorrichtung der genannten Art verhindert um eine Fehlbetankung zu vermeiden.

Derartige Vorrichtungen sind beispielsweise aus der DE 20 2004 013 627 U1 oder der DE 20 2005 014 387 U1 bekannt.

Weiters ist aus der DE 101 57 090 C1 eine Anordnung zum Verhindern des Bedankens eines Dieselfahrzeuges mit bleifreiem Benzin bekannt, mit einem hin- und herbewegbaren Sperrhebel, der an seinem der Tanköffnung abgekehrten Ende mit einer Sperrlasche versehen ist, die in der Ruhelage in den Querschnitt des Tankstutzens hineinragt und ein Einführen eines Benzinrohres mit einem kleineren Durchmesser in den Tank verhindert und die in der Betankstellung den Tankstutzen zum Einführen eines Dieselrohres mit einem größeren Durchmesser freigibt.

Eine Hemmvorrichtung für eine Zapfpistole ist aus der EP 1 736 351 A2 bekannt. Diese Vorrichtung umfasst eine erste und eine zweite Falle für eine kleine Zapfpistole, die jeweils eine um eine Schwenkachse schwenkbare Sperreinheit mit einem Sperrarm aufweisen und jeweils einen Betätigungsarm, der mit einer Gelenkstange verbunden ist, welche sich entlang der Schwenkachse der Sperreinheit erstreckt.

Aus der US 2010/218849 A1 ist eine gattungsbildende Öffnungs- und Schließvorrichtung für einen Kraftstofftank bekannt. Die Vorrichtung verwendet ein Klappventil dass über eine seitlich verschiebbare Blende verriegelbar ist. Die Blende ist über Kopplungsflächen, die am unteren Ende von Druckhebeln ausgebildet sind, verschiebbar.

Es ist eine Aufgabe der Erfindung, einen Einfüllstutzen für einen Diesel-Kraftstoffbehälter mit einer Sperrvorrichtung zur Vermeidung einer Fehlbetankung durch ein Zapfventil mit geringerem Durchmesser als dem minimalen Durchmesser eines Diesel-Zapfventils anzugeben, die zuverlässig funktioniert und dabei kostengünstig in der Herstellung ist.

Die Lösung der Aufgabe erfolgt durch einen Einfüllstutzen für einen Diesel-Kraftstoffbehälter mit einer Sperrvorrichtung zur Vermeidung einer Fehlbetankung durch ein Zapfventil mit geringerem Durchmesser als dem minimalen Durchmesser eines Diesel-Zapfventils, umfassend
- zwei Steuerhebel, die an Steuerhebelachsen schwenkbar im Gehäuse des Einfüllstutzens gelagert sind, wobei die Steuerhebel so ausgeführt sind, dass beim Einführen eines Zapfventils mit größerem Durchmesser als dem minimalen Durchmesser eines Diesel-Zapfventils in den Einfüllstutzen eine definierte stärkere Ausschwenkbewegung der Steuerhebel auftritt, die beim Einführen eines Zapfventils mit geringerem Durchmesser als dem minimalen Durchmesser eines Diesel-Zapfventils nicht auftritt,
- einen an einer Sperrhebelachse im Gehäuse des Einfüllstutzens gelagerten Sperrhebel, der schwenkbar ist zwischen einer Sperrstellung, in der das Einführen eines Zapfventils über den Sperrhebel hinaus verhindert wird und einer Offenstellung, in der das Einführen eines Zapfventils über den Sperrhebel hinaus erlaubt wird,
- eine Sperrklinke die bewegbar ist zwischen einer Fixierstellung und einer Nicht-Fixierstellung, und die mit dem Sperrhebel derart zusammenwirkt, dass die Sperrklinke in ihrer Fixierstellung den Sperrhebel in dessen Sperrstellung fixiert und in ihrer Nicht-Fixierstellung den Sperrhebel nicht in dessen Sperrstellung fixiert, wodurch der Sperrhebel in seine Offenstellung schwenkbar ist,
- eine Sperrklinkenfeder, die die Sperrklinke in Richtung ihrer Fixierstellung belastet,
gekennzeichnet durch
- eine Steuerfeder, die an den zwei Steuerhebeln befestigt und derart angeordnet ist, dass die definierte stärkere Ausschwenkbewegung der Steuerhebel zu einer definierten stärkeren Lageänderung zumindest eines Steuerabschnitts der Steuerfeder führt, wobei die definierte stärkere Lageänderung zumindest des Steuerabschnitts der Steuerfeder dadurch erreicht wird, dass die Enden der Steuerfeder mit den Steuerhebeln nach außen gedrückt werden, und der Steuerabschnitt der Steuerfeder nach innen gedrückt wird,
wobei die Sperrklinke drehbar gelagert ist,
wobei die Steuerfeder derart mit der Sperrklinke zusammenwirkt, dass durch die definierte stärkere Lageänderung zumindest des Steuerabschnitts der Steuerfeder die Sperrklinke aus ihrer Fixierstellung in ihre Nicht-Fixierstellung bewegbar ist
und wobei der Sperrhebel, wenn dieser nicht in seiner Sperrstellung fixiert ist, durch das Einführen eines Zapfventils in seine Offenstellung schwenkt.

Erfindungsgemäß wird durch das Zusammenwirken der Steuerhebel mit der Steuerfeder, der Sperrklinke, dem Sperrhebel und der Sperrklinkenfeder zuverlässig erreicht, dass ein Zapfventil mit größerem Durchmesser, also eine Diesel-Zapfventil in einen erfindungsgemäßen Einfüllstutzen eingeführt werden kann, ein Zapfventil mit kleinerem Durchmesser, also ein Benzin-Zapfventil, jedoch nicht in einen erfindungsgemäßen Einfüllstutzen eingeführt werden kann.

In einer Ruhestellung bzw. beim Einführen eines Zapfventils mit geringem Durchmesser werden die beiden Steuerhebel nicht ausreichend aus ihrer Ruhestellung ausgeschwenkt, so dass auch die Steuerfeder keine wesentliche Lageänderung erfährt und so in einer Position verbleibt, in der die Steuerfeder die Sperrklinke nicht aus deren Fixierstellung löst, in welcher durch die Sperrklinke der Sperrhebel in einer Sperrstellung fixiert wird, so dass das Einführen eines Zapfventils mit geringem Durchmesser verhindert wird. Die Sperrklinkenfeder sorgt durch deren Belastung der Sperrklinke in Richtung der Fixierstellung dafür, dass der Sperrhebel, ohne wesentliches Einwirken der Steuerfeder auf die Sperrklinke, in dessen Sperrstellung fixiert ist.

Hingegen werden beim Einführen eines Zapfventils mit größerem Durchmesser als dem minimalen Durchmesser eines Diesel-Zapfventils die beiden Steuerhebel ausreichend ausgeschwenkt, so dass die Steuerfeder eine ausreichende Lageänderung erfährt um die Sperrklinke in ihre Nicht-Fixierstellung zu bewegen, so dass der Sperrhebel durch das Einführen des Zapfventils mit größerem Durchmesser in seine Offenstellung schwenkt und das weitere Einführen des Zapfventils ermöglicht wird.

Die Lageänderung zumindest des Steuerabschnitts der Steuerfeder erfolgt dabei mit einer Kraft die größer ist als die Belastung der Sperrklinke in Richtung Fixierstellung durch die Sperrklinkenfeder, so dass durch die definierte stärkere Ausschwenkbewegung der Steuerhebel das Schwenken des Sperrhebels in dessen Offenstellung möglich wird.

Selbstverständlich können in einem erfindungsgemäßen Einfüllstutzen auch jeweils mehr als die angegebenen Bauelemente verwendet werden, also mehr als zwei Steuerhebel und mehr als eine Steuerfeder, ein Sperrhebel, eine Sperrklinke und eine Sperrklinkenfeder.

Weiterbildungen der Erfindung sind in den abhängigen Ansprüchen, der Beschreibung sowie den beigefügten Zeichnungen angegeben.

Vorzugsweise sind in einem erfindungsgemäßen Einfüllstutzen die radial zum Inneren des Einfüllstutzens weisenden Innenseiten der zwei Steuerhebel nach innen gekrümmt. Die Innenseiten der Steuerhebel sind also ausgebaucht, so dass die Bäuche der Steuerhebel sich in Richtung eines gegebenenfalls eingeführten Zapfventils erstrecken. Auf diese Weise werden die gekrümmten Bereiche der Steuerhebel beim Einführen eines Zapfventils mit ausreichend großem Durchmesser nach außen gedrückt und so die gesamten Steuerhebel nach außen geschwenkt. Durch geeignete Krümmungen der Innenseiten der Steuerhebel kann auch erreicht werden, dass ein Zapfventil das schräg eingeführt wird eine ähnliche Ausschwenkung der Steuerhebel bewirkt, wie sie das selbe Zapfventil bewirkt, wenn es gerade in den Einfüllstutzen eingeführt wird.

Vorzugsweise liegen die Steuerhebelachsen, um welche die Steuerhebel schwenkbar sind, an dem Ende des Einfüllstutzens das der Tanköffnung zugekehrt ist. Dadurch werden die der Tanköffnung abgekehrten Ende der Steuerhebel beim Einführen eines ausreichend dimensionierten Zapfventils nach außen gedrückt.

In einer bevorzugten Ausführung des Einfüllstutzens sind die zwei Steuerhebel 180 Grad zueinander versetzt um den Einfüllstutzen angeordnet, liegen sich also gegenüber. Dadurch wird sichergestellt dass die beiden Schwenkhebel gut an einem eingeführten Zapfventil anliegen und auch bei einem nicht mittigen Einführen eines Zapfventils die Steuerhebel ausreichend ausgeschwenkt werden, um in weiterer Folge das Einführen des Zapfventils zu ermöglichen.

Vorteilhafterweise entspricht der minimale Abstand der radial zum Inneren des Einfüllstutzens weisenden Innenseiten der zwei Steuerhebel, wenn kein Zapfventil in den Einfüllstutzen eingeführt ist, dem Durchmesser eines Benzin-Zapfventils. Dadurch werden beim Einführen eines Benzin-Zapfventils die Steuerhebel nicht oder kaum ausgelenkt, beim Einführen eines Diesel-Zapfventils jedoch deutlich ausgelenkt.

In einer bevorzugten Ausführungsform ist die Steuerfeder an ihren beiden Enden an den zwei Steuerhebeln befestigt.

Vorzugsweise erfolgt die Befestigung der Steuerfeder an den Steuerhebeln jeweils an jenem Ende der Steuerhebel, das der Tanköffnung abgekehrt ist. Dieses der Tanköffnung abgekehrte Ende der Steuerhebel führt bevorzugt die größte Ausschwenkung des Steuerhebels aus, wodurch diese Befestigungsart die stärkste Lageänderung der Steuerfeder bewirken kann.

Gemäß einer Ausgestaltung der Erfindung wird der Steuerabschnitt der Steuerfeder durch einen mittleren, gerade verlaufenden Teil der Steuerfeder gebildet. Während die Steuerfeder bevorzugt an deren Enden von den Steuerhebeln ausgelenkt wird, wird so der mittlere Teil der Steuerfeder für die Bewegung der Sperrklinke verwendet. Dieser mittlere Teil der Steuerfeder ist besonders dann gut führbar wenn dieser gerade verlaufend ausgeführt ist.

Bevorzugt ist der Steuerabschnitt der Steuerfeder in einem Schlitz des Gehäuses des Einfüllstutzens geführt. Auf diese Weise ist die Bewegung der Steuerfeder gut kontrollierbar.

Der Schlitz des Gehäuses verläuft bevorzugt radial von außen nach innen, also in unterschiedlichem Abstand in Bezug auf die Achse des Einfüllstutzens. Besonders bevorzugt verläuft der Schlitz dabei in einer vorgegebenen Höhe, also in einem vorgegebenen Abstand von der Tanköffnung. Der Steuerabschnitt der Steuerfeder wird also bei deren Lageänderung im Schlitz des Gehäuses radial nach innen bzw. nach außen geführt. Bevorzugt wird durch die definierte Ausschwenkbewegung der Steuerhebel der Steuerabschnitt der Steuerfeder radial nach innen geführt. Dadurch kann die Sperrklinke im Wesentlichen ebenfalls radial nach innen von der Steuerfeder mitgenommen werden.

Besonders bevorzugt verhindert der Sperrhebel, in seiner Sperrstellung das Einführen eines Zapfventils über den Sperrhebel hinaus durch Abdecken eines ausreichenden Teils des Einfüllstutzen-Durchmessers und erlaubt in seiner Offenstellung das Einführen eines Zapfventils über den Sperrhebel hinaus durch Freigabe eines ausreichenden Teils des Einfüllstutzen-Durchmessers. Die Funktion des Sperrens bzw. Öffnens des Einfüllstutzens für das weitere Einführen eines Zapfventils wird also dadurch erreicht, dass der Sperrhebel den Durchmesser des Einfüllstutzens soweit abdeckt, dass ein Zapfventil nicht mehr durchführbar ist, bzw. nicht soweit abdeckt.

In einer Ausgestaltung der Erfindung weist der Sperrhebel eine Kontur mit einer Einbuchtung auf, wobei sich die Sperrklinke in ihrer Nicht-Fixierstellung befindet, wenn ein bewegliches Ende der Sperrklinke in der Einbuchtung liegt. Außerhalb der Einbuchtung bildet die Kontur des Sperrhebels eine Fläche, beispielsweise eine Rampe aus, entlang welcher die Sperrklinke bis zur Einbuchtung bewegt werden kann. Solange die Sperrklinke auf der Fläche außerhalb der Einbuchtung aufliegt, verhindert die Sperrklinke ein Schwenken des Sperrhebels in Richtung der Sperrklinke. Gelangt die Sperrklinke in die Einbuchtung oder zumindest an den Rand der Einbuchtung, so wird eine Schwenkbewegung in Richtung zur Sperrklinke ermöglicht.

Gemäß einer bevorzugten Ausführungsform der Erfindung wird der Steuerabschnitt der Steuerfeder bei der definierten stärkeren Lageänderung zumindest des Steuerabschnitts der Steuerfeder nach innen gedrückt und dadurch das bewegliche Ende der Sperrklinke in die Einbuchtung des Sperrhebels gedrückt.

Die Erfindung wird im Folgenden beispielhaft unter Bezugnahme auf die Zeichnungen beschrieben.
- Fig. 1: ist eine dreidimensionale Schnittdarstellung eines erfindungsgemäßen Einfüllstutzens mit Sperrvorrichtung.
- Fig. 2: ist eine Vorderansicht eines erfindungsgemäßen Einfüllstutzens mit einem Benzin-Zapfventil mit minimalem Durchmesser.
- Fig. 3: ist eine Draufsicht auf einen erfindungsgemäßen Einfüllstutzen mit einem Benzin-Zapfventil mit minimalem Durchmesser.
- Fig. 4: ist eine Seitenansicht eines erfindungsgemäßen Einfüllstutzens mit einem Benzin-Zapfventil mit minimalem Durchmesser.
- Fig. 5: ist eine Vorderansicht eines erfindungsgemäßen Einfüllstutzens mit einem Benzin-Zapfventil mit maximalem Durchmesser.
- Fig. 6: ist eine Draufsicht auf einen erfindungsgemäßen Einfüllstutzen mit einem Benzin-Zapfventil mit maximalem Durchmesser.
- Fig. 7: ist eine Seitenansicht eines erfindungsgemäßen Einfüllstutzens mit einem Benzin-Zapfventil mit maximalem Durchmesser.
- Fig. 8: ist eine Vorderansicht eines erfindungsgemäßen Einfüllstutzens mit einem Diesel-Zapfventil mit minimalem Durchmesser.
- Fig. 9: ist eine Draufsicht auf einen erfindungsgemäßen Einfüllstutzen mit einem Diesel-Zapfventil mit minimalem Durchmesser.
- Fig. 10: ist eine Seitenansicht eines erfindungsgemäßen Einfüllstutzens mit einem Diesel-Zapfventil mit minimalem Durchmesser.
- Fig. 11: ist eine Seitenansicht eines erfindungsgemäßen Einfüllstutzens mit einem Diesel-Zapfventil mit minimalem Durchmesser.
- Fig. 12: ist eine Draufsicht auf einen erfindungsgemäßen Einfüllstutzen mit einem Diesel-Zapfventil mit maximalem Durchmesser.
- Fig. 13: ist eine Seitenansicht eines erfindungsgemäßen Einfüllstutzens mit einem Diesel-Zapfventil mit maximalem Durchmesser.

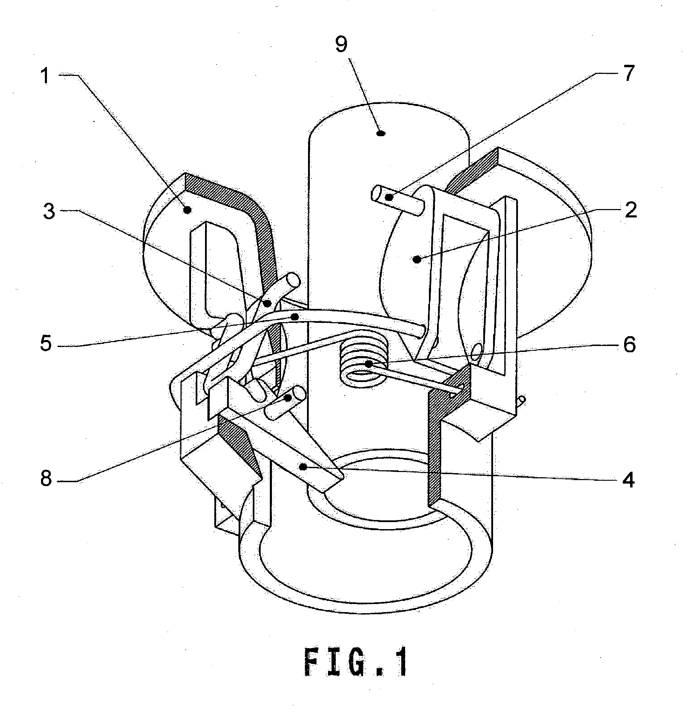

In der Fig. 1 ist ein erfindungsgemäßer Einfüllstutzen für einen Diesel-Kraftstoffbehälter mit einer Sperrvorrichtung zur Vermeidung einer Fehlbetankung in einer dreidimensionalen Schnittdarstellung gezeigt. Im Gehäuse 1 des Einfüllstutzens sind zwei Steuerhebel 2 an deren Steuerhebelachsen 7 schwenkbar gelagert, wovon in der Fig. 1 nur ein Steuerhebel 2 mit dessen Steuerhebelachse 7 sichtbar ist. Die Steuerhebelachsen 7 befinden sich am der Tanköffnung zugewandten Ende des Einfüllstutzens, also in Einbaurichtung oben, so dass die unteren Enden der Steuerhebel 2 um die Steuerhebelachsen 7 ausschwenken können. Eine Steuerfeder 5 ist an ihren Enden an den Steuerhebeln 2 gelenkig befestigt. Die Steuerfeder 5 weist mittig einen geraden Bereich auf, der radial außenseitig an einer Sperrklinke 3 anliegt. An der gegenüberliegenden Seite, also radial innenseitig, ist die Sperrklinke 3 von einer Sperrklinkenfeder 6 nach außen, also gegen die Steuerfeder 5, belastet. Die Sperrklinke 3 ist an ihrem oberen, der Tanköffnung zugewandten Ende, drehbar gelagert und liegt ihrerseits mit ihrem beweglichen unteren Ende an einem Sperrhebel 4 an. Der Sperrhebel 4 ist drehbar an einer Sperrhebelachse 8 im Gehäuse des Einfüllstutzens gelagert ist. Der Sperrhebel 4 weist in der Nähe der Auflagefläche der Sperrklinke eine Einbuchtung auf, die ausreichend groß dimensioniert ist um das bewegliche Ende der Sperrklinke aufnehmen zu können. Durch die Auflage der Sperrklinke 3 auf der ebenen Fläche des Sperrhebels 4 außerhalb dessen Einbuchtung ist der Sperrhebel 4 fixiert, so dass der Sperrhebel 4 nicht um die Sperrhebelachse 8 nach unten schwenken kann. In den Einfüllstutzen ist ein Zapfventil 9 eingeführt, dass vom fixierten Sperrhebel 4 daran gehindert wird, über den Sperrhebel 4 hinaus weiter in den Einfüllstutzen eingeführt zu werden.

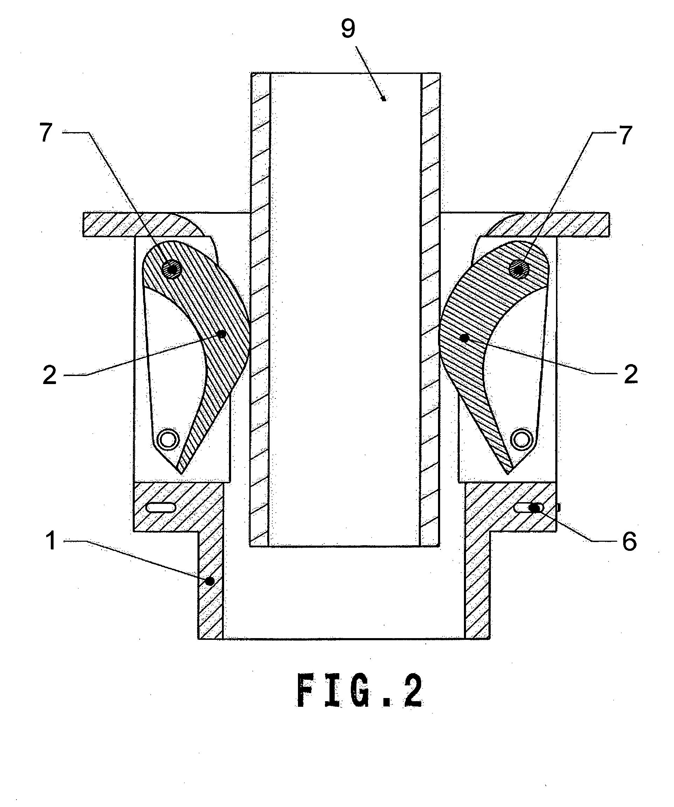

Wie in den Fig. 2 bis Fig. 4 gezeigt, wird das Einführen eines Zapfventils 9 mit einem minimalen Durchmesser eines Benzin-Zapfventils von einem erfindungsgemäßen Einfüllstutzen verhindert.

In Fig. 2 ist dargestellt, dass die beiden Steuerhebel 2 durch Einführen eines Zapfventils 9 mit dem minimalen Durchmesser eines Benzin-Zapfventils nur wenig oder gar nicht auseinandergedrückt werden, nämlich bis auf einen Abstand der Steuerhebel 2 der dem Durchmesser des Zapfventils 9 entspricht. Der Abstand der Steuerhebel 2 entspricht im Ruhezustand ungefähr dem Durchmesser eines minimalen Benzin-Zapfventils.

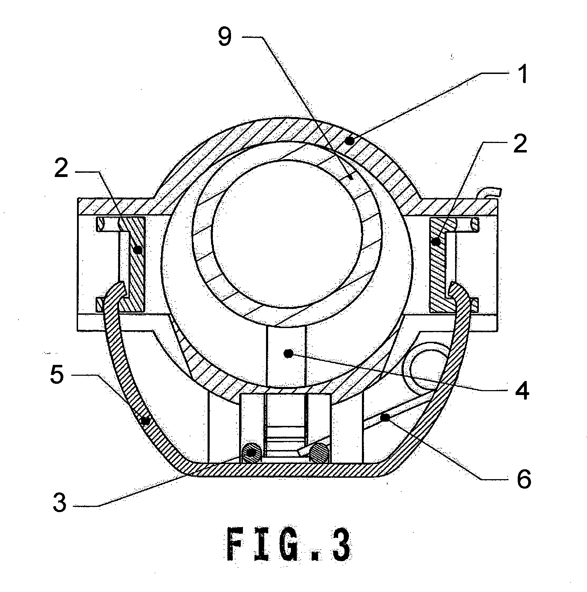

In Fig. 3 ist der selbe Sachverhalt in einer Draufsicht dargestellt. Die Enden der Steuerfeder 5 werden durch die unwesentliche Ausschwenkung der Steuerhebel 2 nur minimal oder gar nicht nach außen gedrückt. Daher wird der mittige, gerade Steuerabschnitt der Steuerfeder 5 auch nicht wesentlich nach innen gedrückt, so dass die Sperrklinke 3 nicht nach innen, in Richtung der Einbuchtung des Sperrhebels 4 mitgenommen wird. Die Sperrklinkenfeder 6 belastet die Sperrklinke 3 nach außen.

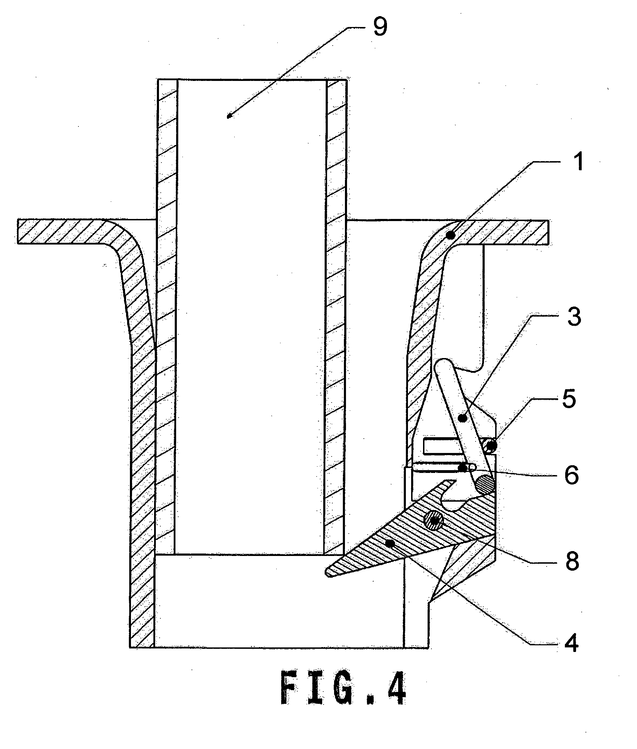

Wie in Fig. 4 gut ersichtlich, ist der Steuerabschnitt der Steuerfeder 5 in einem Schlitz des Gehäuses 1 geführt, der von radial außen nach innen verläuft. Da die Steuerfeder 5 wie zu Fig. 3 beschrieben nur eine unwesentliche Lageänderung erfährt, verbleibt sie in einer Position außen in diesem Schlitz. Die Sperrklinke 3 verbleibt von der Sperrklinkenfeder 6 nach außen belastet ebenfalls in ihrer Position, in der sie den Sperrhebel 4 in dessen Sperrstellung fixiert. Daher ist es nicht möglich das Zapfventil 9 weiter in den Einfüllstutzen einzuführen.

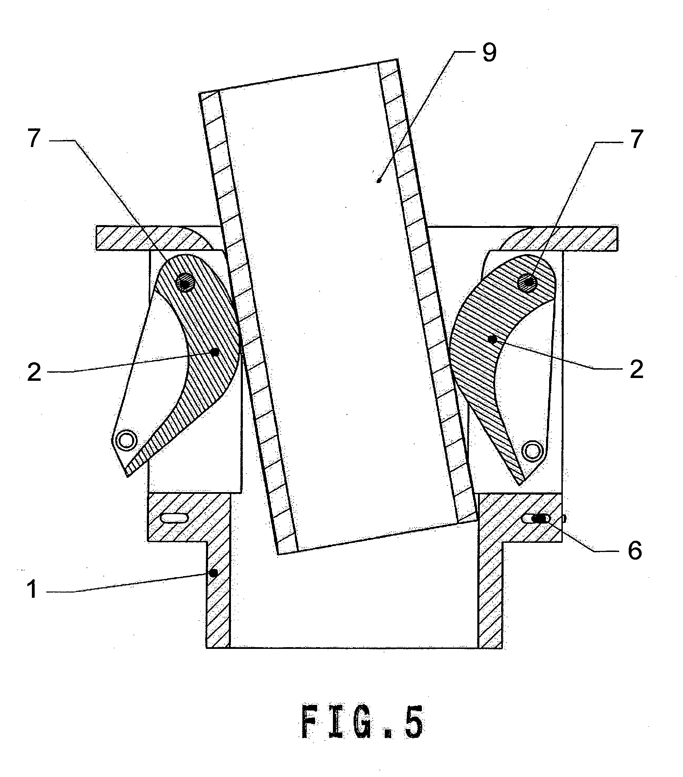

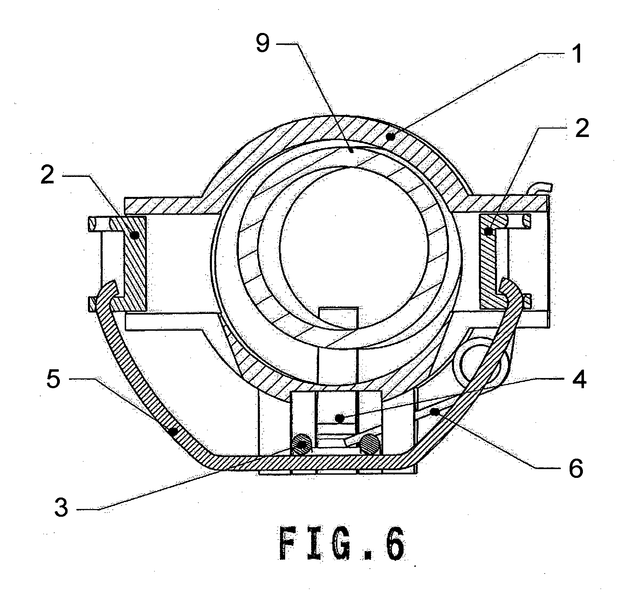

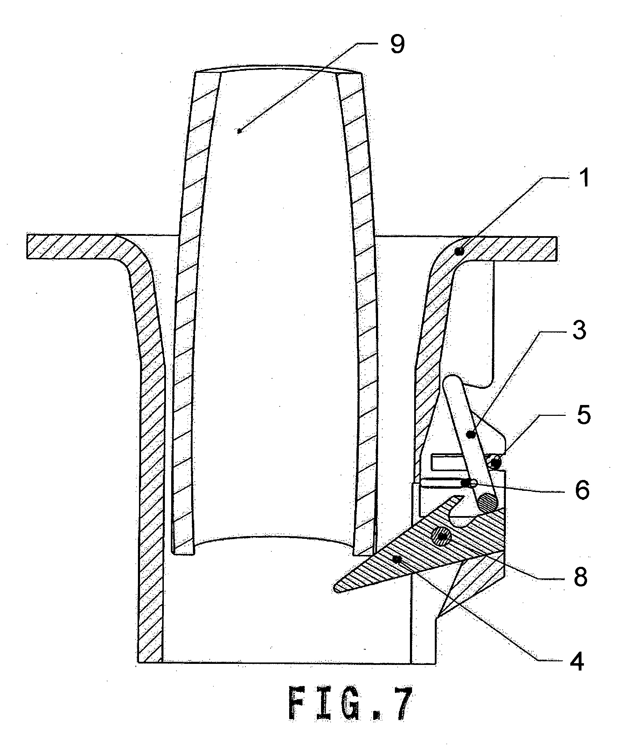

Wie in Fig. 5 bis Fig. 7 dargestellt, wird auch ein Zapfventil 9 mit dem Durchmesser eines maximalen Benzin-Zapfventils am Durchführen durch die erfindungsgemäße Sperrvorrichtung gehindert.

Fig. 5 stellt eine Situation dar, in er ein Zapfventil 9 mit maximalem Benzin-Zapfventil-Durchmesser schräg an den Einfüllstutzen angesetzt wird. Durch die gekrümmte Form der Steuerhebel 2 wird sichergestellt, dass auch bei einer Schrägstellung eines Zapfventils 9 die Steuerhebel 2 nicht weiter als gewünscht ausschwenken. Die Steuerhebel 2 schwenken daher beim Einführen eines maximalen Benzin-Zapfventils zwar etwas weiter auseinander als für ein minimales Benzin-Zapfventil, jedoch bleibt die Lageänderung des Steuerabschnitts der Steuerfeder 5 und der Sperrklinke 3 noch so gering, dass der Sperrhebel 4 noch nicht freigegeben wird, wie in den Fig. 5 bis Fig. 7 dargestellt.

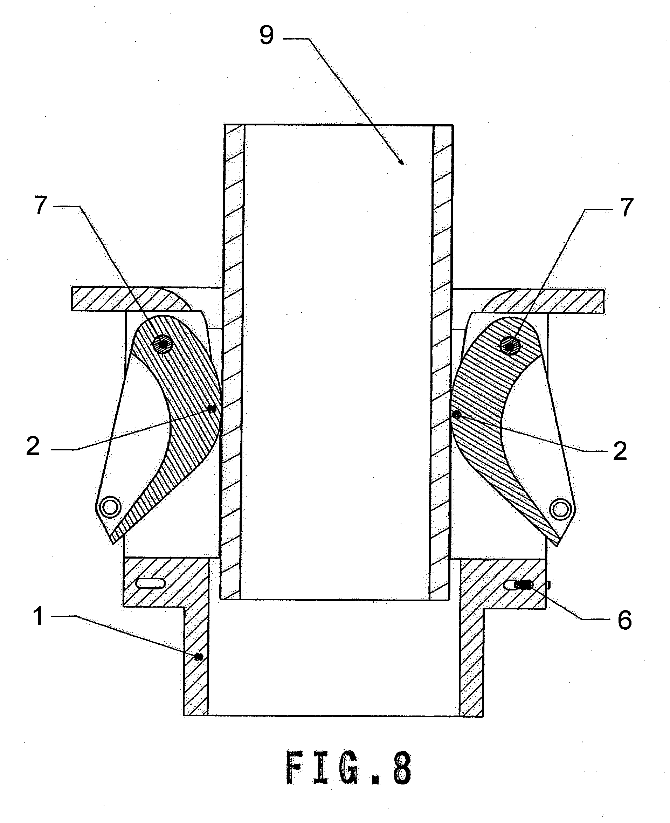

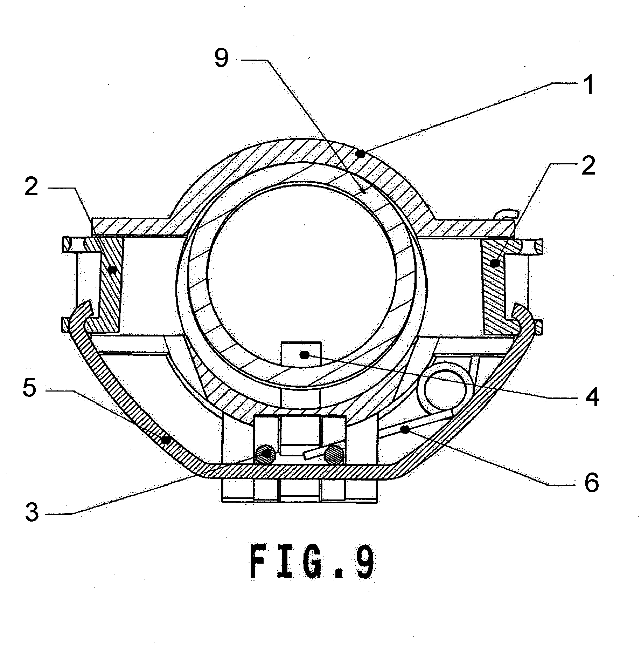

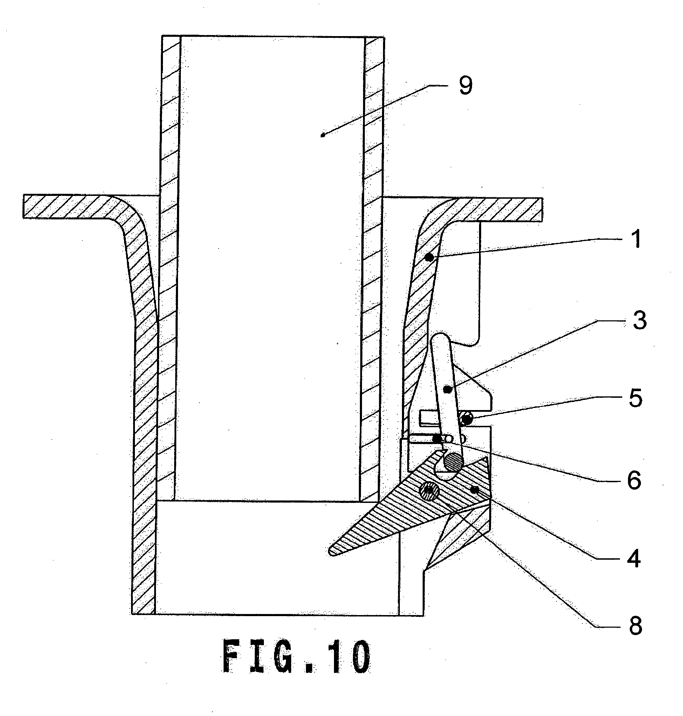

In den Fig. 8 bis Fig. 11 ist ersichtlich wie die Sperrvorrichtung eines erfindungsgemäßen Einfüllstutzens das Einführen eines Zapfventils 9 mit einem Durchmesser eines minimalen Diesel-Zapfventils über den Sperrhebel 4 hinaus erlaubt.

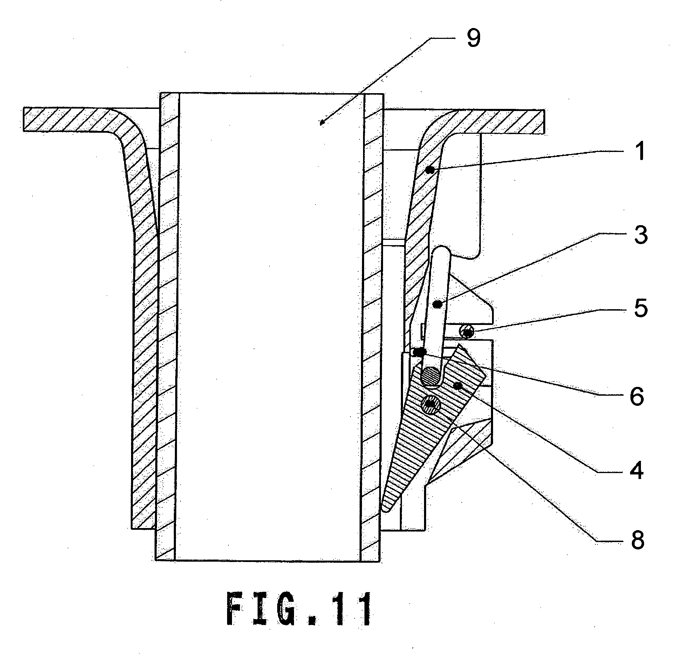

Durch das Einführen eines Zapfventils 9 mit einem Durchmesser eines minimalen Diesel-Zapfventils werden die beiden Steuerhebel 2 soweit auseinandergedrückt, dass die Steuerfeder 5 soweit an ihren Enden nach außen und in ihrer Mitte nach innen gedrückt wird, dass die Sperrklinke 3 über die Rampe des Sperrhebels 4 nach innen hinweggleitet, sodass der Sperrhebel 4 nicht mehr in seiner Sperrstellung fixiert ist. Wie in Fig. 11 ersichtlich, ist dadurch ein weiteres Einführen des Zapfventils 9 über den Sperrhebel 4 hinaus möglich. Durch das Einführen des Zapfventils 9 wird nun der Sperrhebel 4 noch weiter nach unten geschwenkt, was durch die Einbuchtung des Sperrhebels 4 ohne größere Kraftaufwendung möglich ist. Die Sperrklinke 3 wird dabei noch weiter nach innen, gegen die Sperrklinkenfeder 6 mitgenommen.

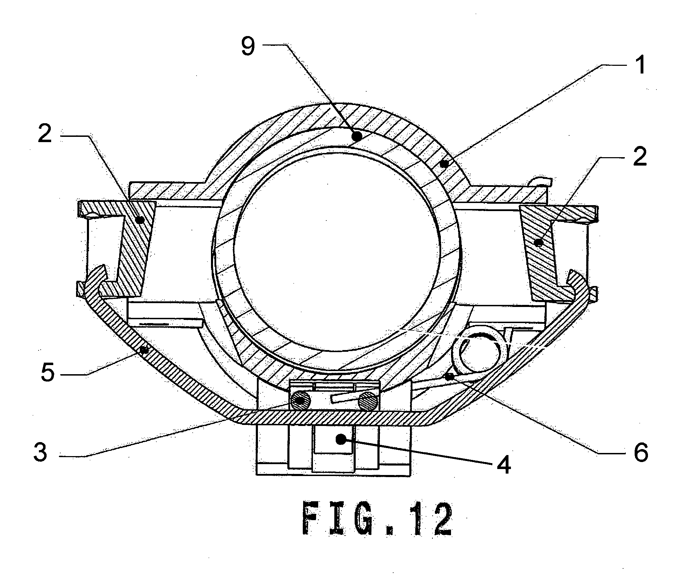

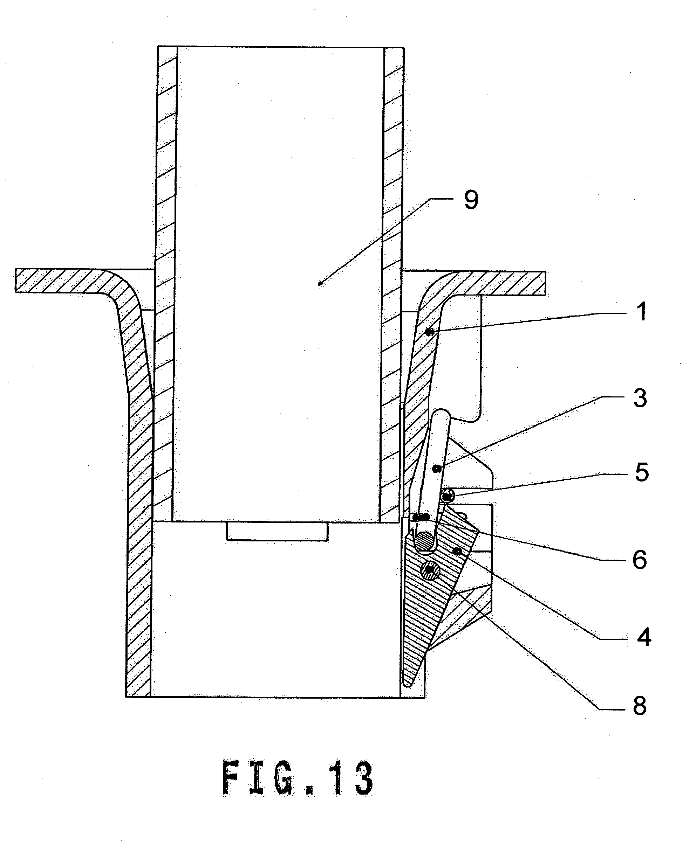

In den Fig. 12 und Fig. 13 ist schließlich gezeigt, wie auch ein Zapfventil 9 mit dem Durchmesser eines maximalen Diesel-Zapfventils in den erfindungsgemäßen Einfüllstutzen eingeführt werden kann. Der Steuerabschnitt der Steuerfeder 3 und damit auch die Sperrklinke 3 werden dabei so weit nach innen gedrückt, dass der Steuerhebel 4 seine Offenstellung einnimmt, so dass das Einführen des Zapfventils 9 über den Sperrhebel 4 hinaus erlaubt wird.

Die Erfindung beschreibt somit einen zuverlässigen und kostengünstigen Einfüllstutzen für einen Diesel-Kraftstoffbehälter mit einer Sperrvorrichtung zur Vermeidung einer Fehlbetankung durch ein Zapfventil mit geringerem Durchmesser als dem minimalen Durchmesser eines Diesel-Zapfventils.

### Bezugszeichenliste

- 1: Gehäuse
- 2: Steuerhebel
- 3: Sperrklinke
- 4: Sperrhebel
- 5: Steuerfeder
- 6: Sperrklinkenfeder
- 7: Steuerhebelachse
- 8: Sperrhebelachse
- 9: Zapfventil

## Patentansprüche

1. Einfüllstutzen für einen Diesel-Kraftstoffbehälter mit einer Sperrvorrichtung zur Vermeidung einer Fehlbetankung mit einem Zapfventil mit geringerem Durchmesser als dem minimalen Durchmesser eines Diesel-Zapfventils, umfassend
- zwei Steuerhebel (2), die an Steuerhebelachsen (7) schwenkbar im Gehäuse (1) des Einfüllstutzens gelagert sind, wobei die Steuerhebel (2) so ausgeführt sind, dass beim Einführen eines Zapfventils (9) mit größerem Durchmesser als dem minimalen Durchmesser eines Diesel-Zapfventils in den Einfüllstutzen eine definierte stärkere Ausschwenkbewegung der Steuerhebel (2) auftritt, die beim Einführen eines Zapfventils (9) mit geringerem Durchmesser als dem minimalen Durchmesser eines Diesel-Zapfventils nicht auftritt,
- einen an einer Sperrhebelachse (8) im Gehäuse (1) des Einfüllstutzens gelagerten Sperrhebel (4), der schwenkbar ist zwischen einer Sperrstellung, in der das Einführen eines Zapfventils (9) über den Sperrhebel (4) hinaus verhindert wird und einer Offenstellung, in der das Einführen eines Zapfventils (9) über den Sperrhebel (4) hinaus erlaubt wird,
- eine Sperrklinke (3) die bewegbar ist zwischen einer Fixierstellung und einer Nicht-Fixierstellung, und die mit dem Sperrhebel (4) derart zusammenwirkt, dass die Sperrklinke (3) in ihrer Fixierstellung den Sperrhebel (4) in dessen Sperrstellung fixiert und in ihrer Nicht-Fixierstellung den Sperrhebel (4) nicht in dessen Sperrstellung fixiert, wodurch der Sperrhebel (4) in seine Offenstellung schwenkbar ist,
- eine Sperrklinkenfeder (6), die die Sperrklinke (3) in Richtung ihrer Fixierstellung belastet,
**gekennzeichnet durch**
- eine Steuerfeder (5), die an den zwei Steuerhebeln (2) befestigt und derart angeordnet ist, dass die definierte stärkere Ausschwenkbewegung der Steuerhebel (2) zu einer definierten stärkeren Lageänderung zumindest eines Steuerabschnitts der Steuerfeder (5) führt, wobei die definierte stärkere Lageänderung zumindest des Steuerabschnitts der Steuerfeder (5) **dadurch** erreicht wird, dass die Enden der Steuerfeder (5) mit den Steuerhebeln (2) nach außen gedrückt werden, und der Steuerabschnitt der Steuerfeder (5) nach innen gedrückt wird,
wobei die Sperrklinke (3) drehbar gelagert ist,
wobei die Steuerfeder (5) derart mit der Sperrklinke (3) zusammenwirkt, dass **durch** die definierte stärkere Lageänderung zumindest des Steuerabschnitts der Steuerfeder (5) die Sperrklinke (3) aus ihrer Fixierstellung in ihre Nicht-Fixierstellung bewegbar ist und wobei der Sperrhebel (4), wenn dieser nicht in seiner Sperrstellung fixiert ist, **durch** das Einführen eines Zapfventils (9) in seine Offenstellung schwenkt.

2. Einfüllstutzen nach Anspruch 1,
**dadurch gekennzeichnet, dass** die radial zum Inneren des Einfüllstutzens weisenden Innenseiten der zwei Steuerhebel (2) nach innen gekrümmt sind.

3. Einfüllstutzen nach Anspruch 1,
**dadurch gekennzeichnet, dass** die zwei Steuerhebel (2) 180 Grad zueinander versetzt um den Einfüllstutzen angeordnet sind, sich also gegenüber liegen.

4. Einfüllstutzen nach Anspruch 1,
**dadurch gekennzeichnet, dass** der minimale Abstand der radial zum Inneren des Einfüllstutzens weisenden Innenseiten der zwei Steuerhebel (2), wenn kein Zapfventil in den Einfüllstutzen eingeführt ist, dem Durchmesser eines Benzin-Zapfventils entspricht.

5. Einfüllstutzen nach Anspruch 1,
**dadurch gekennzeichnet, dass** die Steuerfeder (5) an ihren beiden Enden an den zwei Steuerhebeln (2) befestigt ist.

6. Einfüllstutzen nach Anspruch 1,
**dadurch gekennzeichnet, dass** der Steuerabschnitt der Steuerfeder (5) durch einen mittleren, gerade verlaufenden Teil der Steuerfeder (5) gebildet wird.

7. Einfüllstutzen nach Anspruch 1,
**dadurch gekennzeichnet, dass** der Steuerabschnitt der Steuerfeder (5) in einem Schlitz des Gehäuses (1) geführt ist.

8. Einfüllstutzen nach Anspruch 7,
**dadurch gekennzeichnet, dass** der Schlitz des Gehäuses (1) radial von außen nach innen verläuft.

9. Einfüllstutzen nach Anspruch 1,
**dadurch gekennzeichnet, dass** der Sperrhebel (4), in seiner Sperrstellung das Einführen eines Zapfventils (9) über den Sperrhebel (4) hinaus durch Abdecken eines ausreichenden Teils des Einfüllstutzen-Durchmessers verhindert und in seiner Offenstellung das Einführen eines Zapfventils (9) über den Sperrhebel (4) hinaus durch Freigabe eines ausreichenden Teils des Einfüllstutzen-Durchmessers erlaubt.

10. Einfüllstutzen nach Anspruch 1,
**dadurch gekennzeichnet, dass** der Sperrhebel (4) eine Kontur mit einer Einbuchtung aufweist und sich die Sperrklinke (3) in ihrer Nicht-Fixierstellung befindet, wenn ein bewegliches Ende der Sperrklinke (3) in der Einbuchtung liegt.

11. Einfüllstutzen nach Anspruch 10,
**dadurch gekennzeichnet, dass** der Steuerabschnitt der Steuerfeder (5) bei der definierten stärkeren Lageänderung zumindest des Steuerabschnitts der Steuerfeder (5) nach innen gedrückt wird und dadurch das bewegliche Ende der Sperrklinke (3) in die Einbuchtung des Sperrhebels (4) gedrückt wird.

## Claims

1. Filler neck for a diesel fuel tank with a blocker device for preventing misfuelling with a nozzle of smaller diameter than the minimum diesel nozzle diameter, comprising
- two control levers (2), which are mounted pivotably on control lever pivots (7) in the filler neck housing (1), the control levers (2) being constructed such that, on insertion of a nozzle (9) of larger diameter than the minimum diesel nozzle diameter into the filler neck, the control levers (2) perform a defined greater pivoting-out movement, which does not occur on insertion of a nozzle (9) of smaller diameter than the minimum diesel nozzle diameter,
- a blocker lever (4) mounted on a blocker lever pivot (8) in the filler neck housing (1), which lever is pivotable between a blocking position, in which insertion of a nozzle (9) beyond the blocking lever (4) is prevented and an open position, in which insertion of a nozzle (9) beyond the blocker lever (4) is allowed,
- a blocker latch (3), which may be moved between an immobilizing position and a non-immobilizing position, and which interacts with the blocker lever (4) such that in its immobilizing position the blocker latch (3) immobilizes the blocker lever (4) in its blocking position and in its non-immobilizing position does not immobilize the blocker lever (4) in its blocking position, whereby the blocker lever (4) may be pivoted into its open position,
- a blocker latch spring (6), which loads the blocker latch (3) towards its immobilizing position,
**characterized by**
- a control spring (5), which is attached to the two control levers (2) and is arranged such that the defined greater pivoting-out movement of the control levers (2) leads to a defined greater change in position for at least one control portion of the control spring (5),
the defined greater change in position of at least the control portion of the control spring (5) being achieved in that the ends the control spring (5) are pushed outwards by the control levers (2), and the control portion of the control spring (5) is pushed inwards,
the blocker latch (3) being rotatably mounted, the control spring (5) interacting with the blocker latch (3) in such a way that the blocker latch (3) may be moved out of its immobilizing position into its non-immobilizing position by the defined greater change in position of at least the control portion of the control spring (5) and the blocker lever (4), if not immobilized in its blocking position, pivoting into its open position through the insertion of a nozzle (9).

2. Filler neck according to Claim 1, **characterized in that** the inner sides, facing radially towards the inside of the filler neck, of the two control levers (2) are curved inwards.

3. Filler neck according to Claim 1, **characterized in that** the two control levers (2) are offset relative to one another by 180 degrees around the filler neck, i.e. are opposite one another.

4. Filler neck according to Claim 1, **characterized in that** the minimum spacing of the inner sides of the two control levers (2) facing radially towards the inside of the filler neck corresponds to the diameter of a petrol nozzle if no nozzle has been inserted into the filler neck.

5. Filler neck according to Claim 1, **characterized in that** the control spring (5) is attached at both ends to the two control levers (2).

6. Filler neck according to Claim 1, **characterized in that** the control portion of the control spring (5) is formed by a central, straight part of the control spring (5).

7. Filler neck according to Claim 1, **characterized in that** the control portion of the control spring (5) is guided in a slot in the housing (1).

8. Filler neck according to Claim 7, **characterized in that** the slot in the housing (1) extends radially from the outside inwards.

9. Filler neck according to Claim 1, **characterized in that** the blocker lever (4), in its blocking position, prevents insertion of a nozzle (9) beyond the blocker lever (4) by occupying a sufficient part of the filler neck diameter and in its open position allows insertion of a nozzle (9) beyond the blocker lever (4) by opening up a sufficient part of the filler neck diameter.

10. Filler neck according to Claim 1, **characterized in that** the blocker lever (4) comprises a contour with a notch and the blocker latch (3) is located in its non-immobilizing position if a movable end of the blocker latch (3) lies in the notch.

11. Filler neck according to Claim 10, **characterized in that** the control portion of the control spring (5) is pushed inwards on the defined greater change in position at least of the control portion of the control spring (5) and the movable end of the blocker latch (3) is thereby pushed into the notch in the blocker lever (4).

## Revendications

1. Tubulure de remplissage pour un réservoir de carburant diesel comprenant un dispositif de verrouillage pour éviter un remplissage accidentel avec un pistolet de remplissage de plus faible diamètre que le diamètre minimal d'un pistolet de remplissage diesel, comprenant :
- deux leviers de commande (2) qui sont supportés de manière pivotante dans le boîtier (1) de la tubulure de remplissage au niveau d'axes de levier de commande (7), les leviers de commande (2) étant réalisés de telle sorte que lors de l'insertion d'un pistolet de remplissage (9) de plus grand diamètre que le diamètre minimal d'un pistolet de remplissage diesel dans la tubulure de remplissage, un mouvement de pivotement plus fort défini des leviers de commande (2) se produise, lequel ne se produit pas lors de l'insertion d'un pistolet de remplissage (9) de plus faible diamètre que le diamètre minimal d'un pistolet de remplissage diesel,
- un levier de verrouillage (4) supporté dans le boîtier (1) de la tubulure de remplissage au niveau d'un axe de levier de verrouillage (8), lequel peut pivoter entre une position de verrouillage dans laquelle l'insertion d'un pistolet de remplissage (9) au-delà du levier de verrouillage (4) est empêchée et une position d'ouverture dans laquelle l'insertion d'un pistolet de remplissage (9) au-delà du levier de verrouillage (4) est possible,
- un cliquet de verrouillage (3) qui peut être déplacé entre une position de fixation et une position de non-fixation, et qui coopère avec le levier de verrouillage (4) de telle sorte que le cliquet de verrouillage (3), dans sa position de fixation, fixe le levier de verrouillage (4) dans sa position de verrouillage et, dans sa position de non-fixation, ne fixe pas le levier de verrouillage (4) dans sa position de verrouillage, de sorte que le levier de verrouillage (4) puisse pivoter dans sa position d'ouverture,
- un ressort de cliquet de verrouillage (6) qui sollicite le cliquet de verrouillage (3) dans la direction de sa position de fixation, **caractérisée par**
- un ressort de commande (5) qui est fixé au niveau des deux leviers de commande (2) et est disposé de telle sorte que le mouvement de pivotement plus fort défini des leviers de commande (2) conduise à une variation de position plus forte définie d'au moins une portion de commande du ressort de commande (5), la variation de position plus forte définie d'au moins la portion de commande du ressort de commande (5) étant réalisée par le fait que les extrémités du ressort de commande (5) sont pressées vers l'extérieur avec les leviers de commande (2) et la portion de commande du ressort de commande (5) est pressée vers l'intérieur,
le cliquet de verrouillage (3) étant monté à rotation,
le ressort de commande (5) coopérant avec le cliquet de verrouillage (3) de telle sorte que par la variation de position plus forte définie d'au moins la portion de commande du ressort de commande (5), le cliquet de verrouillage (3) puisse être déplacé hors de sa position de fixation dans sa position de non-fixation, et le levier de verrouillage (4), lorsque celui-ci n'est pas fixé dans sa position de verrouillage, pivotant dans sa position d'ouverture sous l'effet de l'insertion d'un pistolet de remplissage (9).

2. Tubulure de remplissage selon la revendication 1, **caractérisée en ce que** les côtés intérieurs des deux leviers de commande (2) tournés radialement vers l'intérieur de la tubulure de remplissage sont courbés vers l'intérieur.

3. Tubulure de remplissage selon la revendication 1, **caractérisée en ce que** les deux leviers de commande (2) sont disposés de manière décalée de 180° l'un par rapport à l'autre autour de la tubulure de remplissage, c'est-à-dire qu'ils sont opposés l'un à l'autre.

4. Tubulure de remplissage selon la revendication 1, **caractérisée en ce que** la distance minimale des côtés intérieurs des deux leviers de commande (2) tournés radialement vers l'intérieur de la tubulure de remplissage, lorsqu'aucun pistolet de remplissage n'est inséré dans la tubulure de remplissage, correspond au diamètre d'un pistolet de remplissage d'essence.

5. Tubulure de remplissage selon la revendication 1, **caractérisée en ce que** le ressort de commande (5) est fixé à ses deux extrémités aux deux leviers de commande (2).

6. Tubulure de remplissage selon la revendication 1, **caractérisée en ce que** la portion de commande du ressort de commande (5) est formée par une partie du ressort de commande (5) centrale, s'étendant en ligne droite.

7. Tubulure de remplissage selon la revendication 1, **caractérisée en ce que** la portion de commande du ressort de commande (5) est guidée dans une fente du boîtier (1).

8. Tubulure de remplissage selon la revendication 7, **caractérisée en ce que** la fente du boîtier (1) s'étend radialement depuis l'extérieur vers l'intérieur.

9. Tubulure de remplissage selon la revendication 1, **caractérisée en ce que** le levier de verrouillage (4), dans sa position de verrouillage, empêche l'insertion d'un pistolet de remplissage (9) au-delà du levier de verrouillage (4) par recouvrement d'une partie suffisante du diamètre de la tubulure de remplissage, et, dans sa position d'ouverture, permet l'insertion d'un pistolet de remplissage (9) au-delà du levier de verrouillage (4) par libération d'une partie suffisante du diamètre de la tubulure de remplissage.

10. Tubulure de remplissage selon la revendication 1, **caractérisée en ce que** le levier de verrouillage (4) présente un contour avec un renfoncement, et le cliquet de verrouillage (3) se trouve dans sa position de non-fixation si une extrémité mobile du cliquet de verrouillage (3) se situe dans le renfoncement.

11. Tubulure de remplissage selon la revendication 10, **caractérisée en ce que** la portion de commande du ressort de commande (5), lors de la variation de position plus forte définie d'au moins la portion de commande du ressort de commande (5), est pressée vers l'intérieur et de ce fait l'extrémité mobile du cliquet de verrouillage (3) est pressée dans le renfoncement du levier de verrouillage (4).
